**Europäisches Patentamt**

**European Patent Office**

**Office européen des brevets**

(11) Veröffentlichungsnummer: **0 106 985**
**B1**

(19)

(12) **EUROPÄISCHE PATENTSCHRIFT**

(45) Veröffentlichungstag der Patentschrift:
01.06.88

(21) Anmeldenummer: **83108586.5**

(22) Anmeldetag: **31.08.83**

(51) Int. Cl.⁴: **H 04 B  3/46,** H 04 L  1/24,
**H 04 B  17/02**

(54) Betriebsüberwachung von digitalen Übertragungsstrecken.

(30) Priorität: **02.09.82 DE 3232681**

(43) Veröffentlichungstag der Anmeldung:
**02.05.84 Patentblatt 84/18**

(45) Bekanntmachung des Hinweises auf die Patenterteilung:
**01.06.88 Patentblatt 88/22**

(84) Benannte Vertragsstaaten:
**AT BE CH DE FR GB IT LI NL SE**

(56) Entgegenhaltungen:
**EP - A - 0 044 556**
**GB - A - 1 401 261**
**GB - A - 2 094 110**

(73) Patentinhaber: **Siemens Aktiengesellschaft Berlin und München, Wittelsbacherplatz 2, D-8000 München 2 (DE)**

(72) Erfinder: **Vollnhals, Friedemann, Dipl.-Ing.,
Mühlpointweg 10, D-8190 Wolfratshausen (DE)**
Erfinder: **Gegner, Peter, Ing. grad.,
Werdenfelsstrasse 69, D-8000 München 70 (DE)**

## Beschreibung

Die Erfindung betrifft ein Verfahren zur Betriebsüberwachung digitaler Übertragungsstrecken mit zwischen zwei Leitungsendgeräten angeordneten Zwischenregeneratoren, bei dem ein Telemetriesignal über den gleichen Signalweg wie das digitale Signal übertragen wird, bei dem wenigstens einige der Zwichenregeneratoren Telemetrieeinheiten enthalten, in denen das übertragene Telemetriesignal regeneriert und verstärkt wird und von denen, beim ersten Zwischenregenerator mit Telemetrieeinheit, der kein Telemetriesignal empfängt, angefangen, zyklisch ein aus mehreren Datenblöcken bestehendes Telegramm ausgesendet wird, bei dem die Folge der Telegramme in Form einer Telegrammkette das Telemetriesignal bildet, bei dem die Aussendung jedes anschliessenden Telegramms der Telemetrieeinheit eines Zwischenregenerators durch den Empfang wenigstens eines Telegramms vom Leitungsendgerät oder vom vorhergehenden Zwischenregenerator ausgelöst wird, bei dem eine Eigenüberwachung der Zwischenregeneratoren durchgeführt wird und als Ergebnis dieser Überwachung die Datenblöcke der Telegramme Informationen über den Zustand der empfangenen digitalen Signale und die Funktion des jeweiligen Zwischenregenerators enthalten, bei dem im Ortungsgerät des empfangsseitigen Leitungsendgerätes die Zwischenregeneratoren durch Auszählen der Telemetriesignale lokalisiert werden und die verschiedenen Streckenabschnitte und Zwischenregeneratoren durch Auswerten der Datenblöcke der Telemetriesignale überwacht werden, und eine Anordnung zur Durchführung des erfindungsgemässen Verfahrens.

Bei digitalen Übertragungssystemen hoher Bitrate auf Koaxialkabeln und Lichtwellenleitern ist die überbrückbare Leitungslänge begrenzt. Zwischen zwei Endstellen, bei Koaxialkabeln gleichzeitig den fernspeisenden, ist daher eine grosse Zahl von bis zu einigen hundert Zwischenregeneratoren eingefügt. Zur Gewährleistung der Betriebssicherheit ist eine laufende Überwachung der digitalen Übertragungsstrecke und damit der Leitungsendgeräte und aller Zwischenregeneratoren während des Betriebs erwünscht- Diese Aufgabe übernimmt ein sogenanntes Betriebsüberwachungssystem, das die Funktionszustände der über die Strecke verteilten Zwischenregeneratoren an die in Übertragungsrichtung ferne Endstelle übermittelt, es besteht auch die Möglichkeit, durch Bildung einer Schleife in der fernen Endstelle oder den Zwischenstellen die Funktionszustände der Zwischenregeneratoren beider Übertragungsrichtungen zu einer überwachenden Endstelle am Streckenanfang oder -ende zu übermitteln. Die Übertragung der Überwachungssignale kann entweder auf einer eigenen Leitung oder auf der des Hauptsignals erfolgen. Aus Planungs- und Kostengründen wird letzterer Übertragungsart der Vorzug gegeben. Erfolgt die Übertragung der Haupt- und Überwachungssignale auf einem gemeinsamen Übertragungsmedium, ist für einen ausreichenden gegenseitigen Störabstand beider Signalarten zu sorgen. Digitale Übertragungssysteme hoher Bitraten dürfen nur sehr kleine Bitfehlerraten von $< 10^{-10}$ Bitfehler pro übertragenes Bit je Regeneratorfeld aufweisen. Entsprechend gering muss der Einfluss des Überwachungssignals auf das Augendiagramm an der Entscheiderschwelle des Hauptsignals sein. Dies bedingt, dass das Modulationsspektrum des Überwachungssignals gegenüber dem Spektrum des Hauptsignals von vernachlässigbarem Einfluss ist. Andererseits muss aber auch innerhalb der Bandbreite des Überwachungssignals das anteilige Spektrum des Hauptsignals ausreichend klein sein, um eine sichere Übertragung der Überwachungssignale zu gewährleisten. Die einander widersprechenden Forderungen bedingen zu ihrer Erfüllung ein entsprechend weites Auseinanderrücken beider Übertragungsspektren, oder wenn dies aus Übertragungsgründen nicht möglich ist, z. B. wegen der bandbegrenzenden Übertragungseigenschaften der Fernspeiseweichen, einen entsprechend hohen Aufwand an Filter- und Entzerrungsmitteln.

Aus der DE-A-30 27 755 (EP-A-44 556) ist ein adressenloses Telemetrieverfahren der eingangs erwähnten Art bekannt. Dieses Verfahren setzt eine Telemetrieeinheit in jedem Zwischenregenerator voraus, die einen Telemetriesignal-Regenerator und einen Telemetriesignalsender enthält. Die Aus- und Einspeisung der Überwachungssignale zur und von der Telemetrieeinheit in den Übertragungsweg des Hauptsignals erfolgt dabei über Aus- und Einkoppeleinrichtungen am Eingang und am Ausgang des jeweiligen Zwischenregenerators.

Das sendende Leitungsendgerät enthält ebenfalls einen Telemetriesender, das empfangende Leitungsendgerät, das am fernen Leitungsende angeordnet sein kann oder mit dem sendenden Leitungsendgerät identisch sein kann, enthält eine Telemetrieeinheit und ein nachgeschaltetes Ortungsgerät, das sämtliche empfangenen Überwachungssignale speichert, dechiffriert und anzeigt. Zu Beginn der Übertragung sendet der Telemetriesender im sendenden Leitungsendgerät ein erstes Telegramm vorgegebener Wortlänge mit nachfolgendem Schlusszeichen aus. Die Telemetrieeinheit im ersten Zwischenregenerator empfängt dieses Telegramm, regeneriert es und hängt ihr eigenes Telegramm an das erste an und sendet beide wieder aus. Bei der Weitergabe der Telegramme zu den einzelnen Zwischenregeneratoren entsteht so eine Telegrammkette, die von der letzten Telemetrieeinheit im empfangenden Leitungsendgerät zur Auswertung an das Ortungsgerät abgegeben wird. Im Normalfall enthält damit die Telegrammkette im empfangenden Leitungsendgerät ein Telegramm mehr als Zwischenregeneratoren vorhanden sind. Die zeitliche Zuordnung der Telegramme innerhalb der Telegrammkette entspricht der Reihenfolge der Zwischenregeneratoren in der Übertragungsrichtung bzw. bei der Bildung einer Schleife ab einem bestimmten Telegramm in Gegenrichtung. So ist trotz adressenloser Telegramme im Ortungsgerät eine eindeutige Zuordnung der einzelnen Telegramme zu den jeweiligen Zwischenregeneratoren gegeben.

Tritt im Übertragungsweg eine Störung auf, die zu einer Unterbrechung der Telemetriesignalübertragung führt, beginnt die nächstfolgende Telemetrieeinheit nach einer vorgegebenen Wartezeit von sich aus mit dem Aussenden des eigenen Telegramms mit nachfolgenden Schlusszeichen. Die Telemetrieeinheiten der nachfolgenden Zwischenregeneratoren der Überwachungskette verhalten sich daraufhin so wie im Regelfall, so dass die Telegrammkette mit dem Telegramm des Zwischenregenerators beginnt, der auf den gestörten Abschnitt folgt. Die Telegrammkette ist nun um die Zahl der vor der Störungsstelle befindlichen Zwischenregeneratoren verkürzt, so dass durch Abzählen der Telegramme der Störungsort bestimmbar ist.

Bei dem erläuterten Überwachungsverfahren liegt die Hauptinformation, nämlich die Information über das Vorliegen einer Betriebsstörung und den Störungsort in der Anzahl der Telegramme je Kette am empfangenden Leitungsendgerät. Die Telegramminhalte sind diesbezüglich von untergeordneter Bedeutung, sie dienen im Normalfall der Übermittlung diskreter Funktionszustände der einzelnen Zwischenregeneratoren an das Ortungsgerät und betreffen Anzahl der Coderegelverletzungen, bezogen auf die Bitrate, Betriebszustände einzelner Baugruppen und Informationen über die Fernspeisespannung bzw. die Sendespannung des Hauptsignals.

Bei der eingangs erwähnten grossen Anzahl von bis zu mehreren 100 Zwischenregeneratoren pro Übertragungsstrecke und einer entsprechend langen Telegrammkette ist das vorstehend geschilderte Verfahren empfindlich gegen Störungen, besonders gegen sogenannte Fehlerbursts, so dass sich eine erhebliche Unsicherheit über den tatsächlichen Störungsort ergeben kann.

Die Aufgabe der Erfindung besteht also darin, bei einem Verfahren der eingangs erwähnten Art die Störsicherheit zu verbessern und ausserdem eine Anordnung zur Durchführung des verbesserten Verfahrens anzugeben.

Erfindungsgemäss wird die Aufgabe dadurch gelöst, dass jedes der Telegramme neben den Datenblöcken wenigstens eine Kopfkennung und eine Endekennung aufweist, dass die Kopf- und die Endekennungen der Telegramme untereinander gleich sind und einen Zeitrahmen bilden, dass die Kopf- und Endekennungen der Telegramme in den empfangenden Telemetrieeinheiten überwacht werden und ein Telegramm dann als richtig erkannt gilt, wenn die Anzahl der richtig empfangenen Bits der Kopf- und der Endekennungen einen vorgebbaren Schwellenwert überschreitet, dass nur richtig empfangene Telegramme in der Reihenfolge ihres Empfanges regeneriert, verstärkt und an den nächsten Streckenabschnitt abgegeben werden, dass bei Unterschreiten des vorgegebenen Schwellenwertes das zugehörige Telegramm unterdrückt und dass an dessen Stelle ein Ersatztelegramm in die auszusendende Telegrammkette eingeblendet wird. Das erfindungsgemässe Verfahren hat den besonderen Vorteil des vergleichsweise geringen Aufwandes im Verhältnis zur erreichten Verbesserung der Störsicherheit. Weiterbildungen des erfindungsgemässen Verfahrens sind in den Patentansprüchen 2 und 3 beschrieben, eine wegen ihres Aufbaus in integrierter Technik vorteilhafte Anordnung zur Durchführung des erfindungsgemässen Verfahrens ist in den Patentansprüchen 4 bis 6 beschrieben.

Die Erfindung soll im folgenden anhand der Zeichnung näher erläutert werden. In der Zeichnung zeigt

Fig. 1 den prinzipiellen Aufbau einer Telemetrieeinheit und

Fig. 2 den Aufbau der übertragenen Telegramme und einer Telegrammkette.

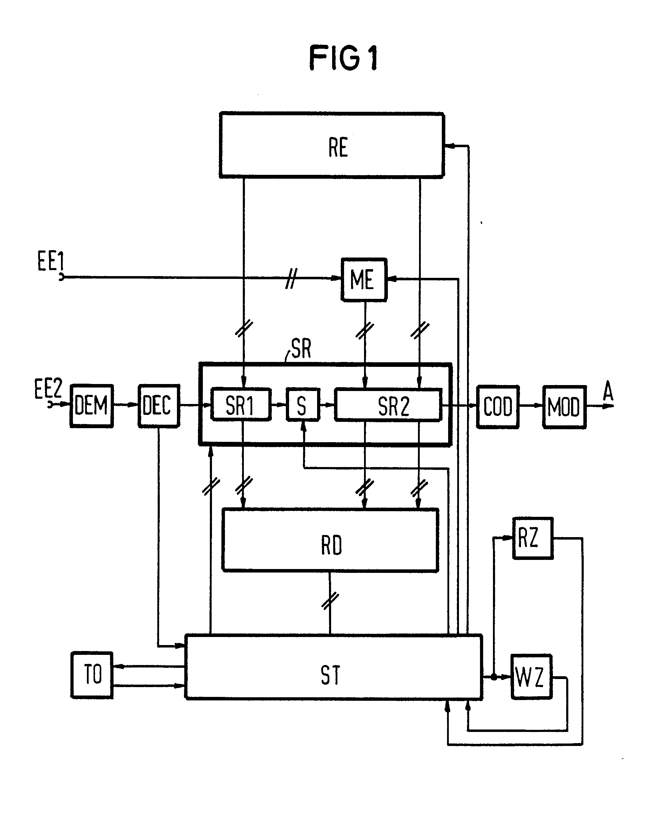

Die Telemetrieeinheit nach der Fig. 1 weist einen ersten Eingang EE1 auf, an den der Meldedatengeber des Zwischenregenerators angeschlossen ist, sowie einen zweiten Eingang EE2, an dem das im Signalweg mitübertragene Telemetriesignal der vorhergehenden Zwischenregeneratoren ansteht. An den ersten Eingang EE1 ist eine Meldedateneingabe ME angeschlossen, die als Serien-Parallel-Wandler fungiert und eine Datencodierung enthält. An den Telemetriesignaleingang EE2 sind nacheinander ein Telemetriesignal-Demodulator DEM und ein Telemetriesignal-Decoder DEC angeschlossen; beim Telemetriesignal-Demodulator DEM handelt es sich um einen AM-Demodulator, im Telemetriesignal-Decoder DEC findet eine Umwandlung vom CD-Code (Conditioned Diphased-) in einen Binärcode statt. Bei anderen Ausführungsbeispielen werden auch Modulatoren bzw. Demodulatoren mit FSK- und PSK-Modulation verwendet. Mit dem einen Ausgang des Telemetriesignal-Decoders ist ein Eingang einer zentralen Steuerung ST verbunden, die als Mehrfachlogik aufgebaut ist. Von einem weiteren Ausgang des Telemetriesignal-Decoders werden die Binärsignale an ein erstes Schieberegister SR1 abgegeben, dessen Ausgang über einen digitalen Schalter S mit dem Eingang eines zweiten Schieberegisters SR2 verbunden ist. An den Ausgang dieses Schieberegisters schliessen sich in Reihe ein Telemetriesignal-Codierer zur Umwandlung der Binärsignale in solche im CD-Code und ein Telemetriesignal-Modulator in Form eines AM-Modulators an, an den der Telemetriesignalausgang der Telemetrieeinheit angeschlossen ist.

Die zentrale Steuerung ST ist mit einem Taktoszillator TO verbunden, der in Form einer Phasenregelschleife aufgebaut ist und der einerseits an die zentrale Steuerung das erzeugte Taktsignal abgibt und andererseits von dieser Nachsteuerungsimpulse erhält. An einen Ausgang der zentralen Steuerung ST sind parallel zwei Binärzähler angeschlossen, der erste dient als Rahmenzähler RZ zur Zählung der 28 Bit, aus denen sich ein Telegramm zusammensetzt, während der andere als Wartezeitzähler WZ eine bestimmte Anzahl von Zeiteinheiten zählt, nach denen bei Wegfall eines Ausgangssignals am Telemetriesignal-Decoder DEC die zentrale Steuerung ST Startimpulse abgibt, durch die die Telemetrieeinheit zum Starter wird und das erste Telegramm einer Telegrammkette abgibt. Mit dem ersten und dem zweiten Schieberegister SR1, SR2 sind ausgangsseitig Eingänge eines Rahmen- und Datenprüfers RD verbunden, der im wesentlichen eine UND-Gatterlogik enthält und das Prüfungsergebnis über einen Ausgang an einen Eingang der zentralen Steuerung ST weiterleitet. Mit einem weiteren Ausgang der zentralen Steuerung ST ist der Eingang eines Rahmenerneuerers RE verbunden, bei dem es sich um ein gesetztes Register handelt, dessen Parallelausgänge mit den Paralleleingängen des ersten und des zweiten Schieberegisters SR1 und SR2 verbunden sind, so dass diese Eingänge durch Ausgangssignale des Rahmenerneuerers RE aktiviert werden können und bei einer Störung der Telemetriesignalübertragung ein Ersatztelegramm eingefügt werden kann.

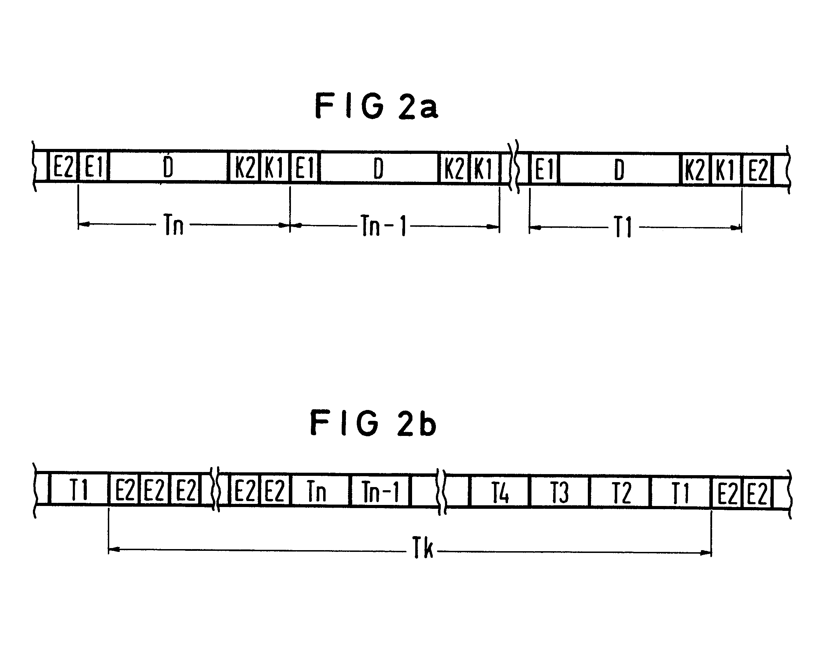

Der Aufbau der übermittelten Telegramme in sich und die Kombination in einer Telegrammkette Tk ist in der Fig. 2 erläutert. In der Fig. 2a sind das letzte, das vorletzte und das erste Telegramm Tn, Tn-1 und T1 einer Telegrammkette dargestellt, die gleich aufgebaut sind und jeweils ein erstes und ein zweites Kopfkennwort K1, K2, den eigentlichen Datenteil und ein erstes Endekennwort E1 enthalten. Im vorliegenden Falle wurden die Kopfkennworte K1 und K2 sowie das Endekennwort E1 mit einer Länge von je 4 Bit gewählt, während der Datenteil eine Länge von 16 Bit umfasst und die Länge des gesamten Telegramms sich damit zu 28 Bit ergibt. Im Hinblick auf die gewählte Übertragungsgeschwindigkeit von 2,4 kBit/s ergibt sich damit die Zeitdauer für die Übermittlung eines Telegramms zu etwa 12 ms.

In der Fig. 2b ist eine vollständige Telegrammkette dargestellt, die neben den aufeinanderfolgenden Einzeltelegrammen als Füllzeichen eine Anzahl zweiter Endekennwörter E2 enthält. Diese zweiten Endekennwörter stellen gleichzeitig das Schlusszeichen der Telegrammkette dar, bei deren Empfang eine Rückstellung des entsprechenden Ortungsgerätes erfolgt. Die Telegrammkette weist im Ausführungsbeispiel bei einer maximalen Anzahl von 512 Telegrammen und einer entsprechenden Anzahl an Schlusszeichen eine Zykluszeit von etwa 6,8 sec auf.

Die aus den ersten und zweiten Schieberegistern SR1, SR2 bestehende Schieberegisteranordnung nach der Fig. 1 weist insgesamt 32 Schieberegisterstufen auf, so dass ein Wort mit einer Länge von 32 Bit jeweils überprüft werden kann. Damit ist es möglich, neben einem gesamten Telegramm auch das erste Kopfkennwort K1 des nächsten Telegramms oder das Schlusszeichen E2, wenn es sich um das letzte Telegramm handelt, in einen einzelnen Überwachungsvorgang einzubeziehen.

In der nachfolgenden Tabelle ist im oberen Teil schematisch ein derartiges zu überwachendes Wort mit einer Bitlänge von 32 Bit dargestellt.

Tabelle
Datenverarbeitung TRS:     Entscheidungstabellen der Telegrammabfrage zur Steuerung der Betriebsfunktionen

| Bit | 32 | 28 | 24 | 20 | 16 | 12 | 8 | 4 | |
|---|---|---|---|---|---|---|---|---|---|
| Tele-<br>gramm → | H | G | F | E | D | C | B | A | → |

1) Betriebszustand «Normal»

| Empfang | K | E1 | | | | | K2 | K1 | Sollwort |
|---|---|---|---|---|---|---|---|---|---|
| Telegramm<br>in der<br>Kette | K | E1 | | | | | K | x | zulässige<br>Abweichung |
| | K | E1 | | | | | x | K | |
| | K | x | | | | | K | K | |
| | nE2 | E1 | | | | | K | K | |
| | | | | | | | | | → Triggern<br>Wartezeit |
| | X | E1 | | | | | K | K | Erneuerung |

**Empfang letztes Telegramm der Kette**

| | | | | | | | | |
|---|---|---|---|---|---|---|---|---|
| E2 | E1 | | | | | K | K | Sollwort |
| E2 | E1 | | | | | K | x | } zulässige |
| E2 | E1 | | | | | x | K | Abweichung |
| E2 | x | | | | | K | K | |
| nK | E1 | | | | | K | K | |
| | | | | | | | | → Triggern Wartezeit |
| | | | | | | | | → Abgabe Prüfsignale |
| x | E1 | | | | | K | K | Erneuerung |

**Senden eigenes Telegramm**

| | | | | | | | | |
|---|---|---|---|---|---|---|---|---|
| E2 | E1 | | | | | K | K | Sollwort |
| E2 | E2 | | | | | E2 | E2 | nach 28 Bit |
| E2 | E2 | | | | | E2 | nE1 | } zulässige |
| E2 | E2 | | | | | x | E2 | Abweichung |
| E2 | x | | | | | E2 | E2 | |
| x | E2 | | | | | E2 | E2 | |
| | | | | | | | | → Sendebefehl |
| (E2) | E1 | $\bar{F}$ | F | $\bar{D}$ | D | K | K | Telegramm gesendet |

**Bit Telegramm** →

| 32 H | 28 G | 24 F | 20 E | 16 D | 12 C | 8 B | 4 A | → |
|---|---|---|---|---|---|---|---|---|

## 2) Betriebszustand «Starter»

| | | | | | | | | |
|---|---|---|---|---|---|---|---|---|
| (E2) | E1 | $\bar{F}$ | F | $\bar{D}$ | D | K | K | Telegramm gesendet |
| K | /// | /// | /// | /// | /// | /// | /// | |
| | | | | | | | | → Stoppbefehl Sollwort nach 28 Bit |
| K/E2 | E1 | | | | | K | K | |
| K/E2 | E1 | | | | | K | x | } zulässige |
| K/E2 | E1 | | | | | x | K | Abweichung |
| K/E2 | x | | | | | K | K | |
| x | E1 | | | | | K | K | |
| | | | | | | | | → zurück in 1) |
| nK/nE2 | nE1 | | | | | nK | nK | → Überschreiben Senden bei Zylkuszeit |
| (E2) | E1 | $\bar{F}$ | F | $\bar{D}$ | D | K | K | |

(eingehender Telegramm-kopf) · (alternativ!)

Entsprechend der Tabelle ist nun der Rahmenerkenner und Datenprüfer RD im Ausführungsbeispiel so organisiert, dass ein Telegramm dann als richtig erkannt gilt, wenn von den beiden Kopfkennworten, dem ersten Endekennwort, dem Kopfkennwort K1 des nächsten Telegramms oder dem Schlusszeichen E2, falls es sich um das letzte Telegramm der Kette handelt, also von vier einzelnen Zeichen, drei richtig erkannt werden. In diesem Fall wird zum einen über die zentrale Steuerung ST der Rahmenzähler RZ und der Wartezeitzähler WZ zurückgesetzt, zum andern der Rahmenerneuerer RE aktiviert, durch den die beiden Kopfkennworte K1, K2 und das Endekennwort E1 in der Schieberegisteranordnung durch paralleles Überschreiben erneuert werden. Danach wird das rahmenerneuerte Telegramm ausgelesen und das nächste Telegramm in die Schieberegisteranordnung SR1, SR2 eingelesen, wie dies in der Tabelle nacheinander dargestellt ist.

Durch eine Störung kann nun der Fall eintreten, dass nach Ablauf des Rahmenzählers RZ der Rahmen eines folgenden Telegramms nach den obigen Kriterien nicht erkannt wird, da mehr als eines der Kopfkennworte unleserlich ist und auch kein zweites Schlusszeichen E2 auftritt. In diesem Falle werden alle 28 Bit des nicht erkannten Telegramms durch ein Ersatztelegramm in der Schieberegisteranordnung überschrieben, diese gleichfalls aus- und das nächste Telegramm eingelesen. Für die Dauer der Störung wird dies fortgesetzt, bis die Rahmenerkennung und Datenprüfung den Übergang vom letzten Telegramm zum Schlusszeichen, also vom Endekennwort E1 zum Schlusszeichen E2 oder ersatzweise eine Schlusszeichenfolge im Takte des Rahmenzählers RZ erkennt. Ist dies der Fall, dann werden die unmittelbar dem letzten Telegramm folgenden 28 Schlusszeichenbits im zweiten Schieberegister SR2 durch das eigene Telegramm über die Aktivierung des Rahmenerneuerers RE und der Meldedateneingabe ME parallel überschrieben und danach ebenfalls ausgelesen. Ausserdem prüft der Rahmenerkenner und Datenprüfer RD vor dem Auslesen, ob die Rahmenerneuerung fremder Telegramme und das Einsetzen des Rahmens und der Meldedaten des eigenen Telegramms in das Schieberegister SR2 korrekt erfolgte. Bei negativem Prüfungsergebnis wird das Auslesen gestoppt, so dass die Telemetrieeinheit die Aussendung ihrer Telemetriesignale einstellt. Damit ist sichergestellt, dass die Telemetrieeinheit nur Telegramme mit korrektem Rahmen und beim eigenen Telegramm zusätzlich mit korrekten Daten an die nächste Telemetrieeinheit weitergibt.

Das Ausbleiben von Telemetriesignalen wird in der nächsten Telemetrieeinheit als Betriebsstörung interpretiert. Infolge fehlender Rücksetzsignale veranlasst der Wartezeitzähler WZ nach Ablauf der Wartezeit die zentrale Steuerung ST in den sogenannten «Starterbetrieb» überzugehen. Dies ist als zweiter Betriebszustand in der Tabelle dargestellt. Die Telemetrieeinheit beginnt dann mit der Aussendung ihres eigenen Telegramms mit nachfolgendem Schlusszeichen E2 im Takte der Zykluszeit der Telegrammkette Tk. Während eines derartigen Zyklus kann aber die Störung im vorausgehenden Übertragungsabschnitt behoben sein, so dass die als Starter wirksame Telemetrieeinheit plötzlich wieder Telemetriesignale von der vorausgehenden Telemetrieeinheit erhält. Im Hinblick darauf ist die gesamte Schieberegisteranordnung in ein erstes Schieberegister SR1 mit vier Stufen und ein zweites Schieberegister SR2 mit 28 Stufen durch einen dazwischengeschalteten digitalen Schalter S unterteilt. Im Starterbetrieb sind die beiden Schieberegister durch den in diesem Falle offenen digitalen Schalter S aufgetrennt. Das zweite Schieberegister SR2 dient dann zum Aussenden des eigenen Telegramms mit nachfolgendem Schlusszeichen E2, während das erste Schieberegister SR1, durch den asynchronen Takt des Decoders DEC taktiert, weiterhin für das Einlesen möglicher neuer Telegramme zur Verfügung steht. Erkennt nun der Rahmenerkenner und Datenprüfer RD das erste oder zweite Kopfkennwort K1, K2, so wird die zentrale Steuerung ST umgeschaltet und damit der Starterbetrieb unterbrochen. Dabei wird der digitale Schalter S zum zweiten Schieberegister SR2 geschlossen und das eingehende Telegramm mit dem Takt des Decoders in das zweite Schieberegister eingelesen, ausserdem wird über den Decodertakt der als Phasenregelschleife aufgebaute Taktoszillator TO nachsynchronisiert. Wird von dem Rahmenerkenner und Datenprüfer RD der Rahmen des Telegramms nach den bereits erläuterten Kriterien erkannt, dann wird die zentrale Steuerung ST veranlasst, vom Starter- auf den Normalbetrieb zurückzuschalten. Der Normalbetrieb läuft dann in der bereits geschilderten Weise ab.

Erkennt der Rahmenerkenner und Datenprüfer RD während des Synchronisierzustandes binnen 28 Bit den Rahmen jedoch nicht, verbleibt die Telemetrieeinheit im Starterbetrieb. Der digitale Schalter S zwischen den beiden Schieberegistern wird wieder geöffnet, der Taktoszillator TO auf seine mittlere Schwingfrequenz zurückgeführt und die Aussendung des eigenen Telegramms mit nachfolgenden Schlusszeichen mit Hilfe des separierten zweiten Schieberegisters im Takte der Zykluszeit fortgesetzt.

Der Betriebszustand «Starter» der Telemetrieeinheit ist aufgrund der beschriebenen Abläufe die zwangsweise Folge der Nichterkennung von Telegrammrahmen nach Ablauf der Wartezeit. Im Ausführungsbeispiel wurde deshalb die Wartezeit doppelt so gross wie die Zykluszeit gewählt. Die Telemetrieeinheit kehrt damit nur dann in den Normalbetrieb zurück, und das vom einen Bit zum nächsten, wenn sie den Rahmen eines eingehenden Telegramms nach den erwähnten Kriterien richtig erkannt hat. Dadurch ist sichergestellt, dass ein Normalbetrieb aufgrund vorgetäuschter Telemetriedaten weitgehend unterbunden ist.

Das Ausführungsbeispiel konnte mittels integrierter C-MOS-Bausteine realisiert werden, wobei die Übertragungsrate der digitalen Telemetriesignale bei 2,4 kbit/s und die höchstzulässige Rate von Meldedaten am ersten Eingang E1 bei etwa 3 Mbit/s lag.

**Patentansprüche**

1. Verfahren zur Betriebsüberwachung digitaler Übertragungsstrecken mit zwischen zwei Leitungsendgeräten angeordneten Zwischenregeneratoren, bei dem ein Telemetriesignal über den gleichen Signalwert wie das digitale Signale übertragen wird, bei dem wenigstens einige der Zwischenregeneratoren Telemetrieeinheiten enthalten, in denen das übertragene Telemetriesignal regeneriert und vestärkt wird und von denen, beim ersten Zwischenregenerator mit Telemetrieeinheit, der kein Telemetriesignal empfängt, angefangen, zyklisch ein aus mehreren Datenblöcken bestehendes Telegramm (T) ausgesendet wird, bei dem die Folge der Telegramme in Form einer Telegrammkette (Tk) das Telemetriesignal bildet, bei dem die Aussendung jedes anschliessenden Telegramms der Telemetrieeinheit eines Zwischenregenerators durch den Empfang wenigstens eines Telegramms vom Leitungsendgerät oder vom vorhergehenden Zwischenregenerator ausgelöst wird, bei dem eine Eigenüberwachung der Zwischenregeneratoren durchgeführt wird und als Ergebnis dieser Überwachung die Datenblöcke der Telegramme Informationen über den Zustand der empfangenen digitalen Signale und die Funktion des jeweiligen Zwischenregenerators enthalten, bei dem im Ortungsgerät des empfangsseitigen Leitungsendgerätes die Zwischengenregeneratoren durch Auszählen der Telemetriesignale lokalisiert werden und die verschiedenen Streckenabschnitte und Zwischenregeneratoren durch Auswerten der Datenblöcke der Telemetriesignale überwacht werden, dadurch gekennzeichnet, dass jedes der Telegramme neben den Datenblöcken (D) wenigstens eine Kopfkennung (K1, K2) und eine Endekennung (E1) aufweist, dass die Kopf- und die Endekennungen der Telegramme (T1, . . . ,Tn) untereinander gleich sind und einen Zeitrahmen bilden, dass die Kopf- und Endekennungen der Telegramme in den empfangenden Telemetrieeinheiten überwacht werden und ein Telegramm dann als richtig erkannt gilt, wenn die Anzahl der richtig empfangenen Bits der Kopf- und der Endekennungen einen vorgebbaren Schwellenwert überschreitet, dass nur richtig empfangene Telegramme in der Reihenfolge ihres Empfanges regeneriert, verstärkt und an den nächsten Streckenabschnitt abgegeben werden, dass bei Unterschreiten des vorgegebenen Schwellenwertes das zugehörige Telegramm unterdrückt und dass an dessen Stelle ein Ersatztelegramm in die auszusendende Telegrammkette (Tk) eingeblendet wird.

2. Verfahren nach Patentanspruch 1, dadurch gekennzeichnet, dass das Ersatztelegramm für alle Telemetrieeinheiten die gleiche vorgeschriebene Form aufweist und dass diese empfangsseitig leicht erkennbar ist.

3. Verfahren nach Patentanspruch 2, dadurch gekennzeichnet, dass das Ersatztelegramm einen Hinweis auf die auszusendende Telemetrieeinheit enthält.

4. Telemetrieeinheit zur Durchführung der Verfahren nach Patentansprüchen 1 bis 3, dadurch gekennzeichnet, dass ein Meldedatenerneuerer (ME) vorgesehen ist, dessen Eingang den esten Eingang (EE1) der Telemetrieeinheit bildet, der die zu übermittelnden Daten vom Zwischenregenerator aufnimmt, dass ein Ausgang des Meldedatenerneuerers (ME) mit einem Eingang einer Schieberegisteranordnung (SR) verbunden ist, dass an einem zweiten Eingang (EE2) der Telemetrieeinheit das empfangene Telemetriesignal ansteht und an diesem Eingang nacheinander ein Telemetriesignaldemodulator (DEM) und ein Telemetriesignaldecoder (DEC) angeschlossen ist, dass der eine Ausgang des Telemetriesignaldecoders mit einem Telemetrieeingang der Schieberegisteranordnung (SR) und ein weiterer Ausgang des Telemetriesignaldecoders mit einem Eingang einer zentralen Steuerung (ST) verbunden ist, dass Ausgänge der zentralen Steuerung (ST) mit Steuereingängen der Schieberegisteranordnung (SR), eines Taktoszillators (TO), des Meldedatenerneuerers (ME), eines Rahmenerneuerers (RE), eines Rahmenzählers (RZ) und eines Wartezeitzählers (WZ) verbunden sind, dass ein Ausgang des Taktoszillators (TO), des Rahmenzählers (RZ) und des Wartezeitzählers (WZ) mit Eingängen der zentralen Steuerung (ST) verbunden sind, dass Ausgänge des Rahmenerneuerers (RE) mit Eingängen der Schieberegisteranordnung (SR) verbunden sind und an Ausgänge der einzelnen Stufen der Schieberegisteranordnung (SR) Eingänge eines Rahmen- und Datenprüfers (RD) verbunden sind, dessen Ausgang mit einem zugeordneten Eingang der zentralen Steuerung verbunden ist und dass ein Telemetrieausgang der Schieberegisteranordnung (SR) über die Reihenschaltung eines Telemetriesignalcodierers (COD) und eines Telemetriesignalmodulators (MOD) mit einem Telemetrieausgang (A) der Telemetrieeinheit verbunden ist.

5. Telemetrieeinheit nach Patentanspruch 4, dadurch gekennzeichnet, dass die Schieberegisteranordnung (SR) eingangsseitig ein erstes vierstufiges Schieberegister (SR1) enthält, dessen Ausgang über einen digitalen Schalter (S) mit dem Eingang eines zweiten Schieberegisters (SR2) mit 28 Stufen verbunden ist, dass der Steuereingang des digitalen Schalters (S) mit einem zugeordneten Ausgang der zentralen Steuerung (ST) verbunden ist, dass der Ausgang der letzten Stufe des zweiten Schieberegisters (SR2) den Ausgang der Schieberegisteranordnung (SR) bildet und dass die Stufenausgänge beider Schieberegister die Stufenausgänge der Schieberegisteranordnung (SR) darstellen.

6. Telemetrieeinheit nach Patentanspruch 4, dadurch gekennzeichnet, dass der Telemetriesignalmodulator (MOD) als AM-, FSK- oder PSK-Modulator und der Telemetriesignaldemodulator (DEM) als AM-, FSK- oder PSK-Demodulator ausgebildet ist.

## Claims

1. A method of monitoring the operation of digital transmission links comprising intermediate regenerators which are arranged between two line terminals, where a telemetry signal is transmitted via the same signal path as the digital signal, where at least some of the intermediate regenerators include telemetry units in which the transmitted telemetry signal is regenerated and amplified and from which, commencing from the first intermediate regenerator with a telemetry unit which receives no telemetry signal, a telegram (T) comprising a plurality of data blocks is cyclically transmitted, where the sequence of telegrams forms the telemetry signal in the form of a telegram chain (Tk), where the transmission of each following telegram of the telemetry unit of an intermediate regenerator is triggered by the reception of at least one telegram from the line terminal or from the preceding intermediate regenerator, where self-monitoring of the intermediate regenerators takes place and as a result of this monitoring the data blocks of the telegrams contain information items relating to the status of the received digital signals and to the function of the respective intermediate regenerator, where, in the locating device of the receiving-end line terminal, the intermediate regenerators are localised by counting the telemetry signals and the different link sections and intermediate regenerators are monitored by analysing the data blocks of the telemetry signals, characterised in that each of the telegrams comprises, in addition to the data blocks (D), at least one head code (K1, K2) and one end code (E1), that the head- and end codes of the telegrams (T1, . . . , Tn) are identical to one another and form a time frame, that the head- and end codes of the telegrams are monitored in the receiving telemetry units, and a telegram is considered to have been correctly recognised when the number of correctly received bits of the head- and end codes overshoots a predeterminable threshold value, that only correctly received telegrams are, in the sequence of their reception, regenerated, amplified and forwarded to the next link section, that when the predetermined threshold value is undershot the associated telegram is suppressed and that in its place a replacement telegram is gated into the telegram chain (Tk) which is to be transmitted.

2. A method as claimed in patent claim 1, characterised in that the replacement telegram has the same predetermined form for all the telemetry units and that this form can be easily recognised at the receiving end.

3. A method as claimed in patent claim 2, characterised in that the replacement telegram includes a reference to the telemetry unit which is to be transmitted (sic).

4. A telemetry unit for the execution of the method claimed in patent claims 1 to 3, characterised in that a message data renewer (ME) is provided whose input forms the first input (EE1) of the telemetry unit which receives from the intermediate regenerator the data which is to be transmitted, that an output of the message data renewer (ME) is connected to an input of a shift register arrangement (SR), that the received telemetry signal occurs at a second input (EE2) of the telemetry unit and a telemetry signal demodulator (DEM) and a telemetry signal decoder (DEC) are connected consecutively to this input, that the first output of the telemetry signal decoder is connected to a telemetry input of the shift register (SR), and a further output of the telemetry signal decoder is connected to an input of a central control unit (ST), that outputs of the central control unit (ST) are connected to control inputs of the shift register arrangement (SR), a clock oscillator (TO), the message data renewer (ME), a frame renewer (RE), a frame counter (RZ) and a waiting time counter (WZ), that outputs of the clock oscillator (TO), the frame counter (SZ) and the waiting time counter (WZ) are connected to inputs of the central control unit (ST), that outputs of the frame renewer (RE) are connected to inputs of the shift register arrangement (SR) and outputs of the individual stages of the shift register arrangement (SR) are connected to inputs of a frame- and data checking device (RD) whose output is connected to an assigned input of the central control unit, that a telemetry output of the shift register arrangement (SR) is connected via the series arrangement of a telemetry signal coder (COD) and a telemetry signal modulator (MOD) to a telemetry output (A) of the telemetry unit.

5. A telemetry unit as claimed in patent claim 4, characterised in that at its input end the shift register arrangement (SR) comprises a first four-stage shift register (SR1) whose output is connected via a digital switch (S) to the input of a second shift register (SR2) which has 28 stages, that the control input of the digital switch (S) is connected to an assigned output of the central control unit (ST), that the output of the last stage of the second shift register (SR2) forms the output of the shift register arrangement (SR), and that the stage outputs of the two shift registers represent the stage outputs of the shift register arrangement (SR).

6. A telemetry unit as claimed in patent claim 4, characterised in that the telemetry signal modulator (MOD) is an AM-, FSK or PSK-modulator, and the telemetry signal demodulator (DEM) is an AM-, FSK- or PSK-demodulator.

## Revendications

1. Procédé pour surveiller le fonctionnement de voies de transmission numériques, comportant des régénérateurs intermédiaires placés entre deux équipements terminaux de ligne, procédé selon lequel un signal de télémetrie est transmis par le même trajet de signal que le signal numérique, selon lequel au moins quelques-uns des régénérateurs intermédiaires contiennent des unités de télémétrie, dans lesquelles le signal de télémétrie transmis est régénéré et amplifié et par lesquelles, à commencer par le premier régénérateur intermédiaire avec unité de télémétrie qui ne reçoit pas de signal de télémétrie, un télégramme (T), constitué de plusieurs blocs de données, est émis cycliquement, selon lequel la suite des télégrammes, sous forme d'une chaîne de télégrammes (Tk), constitue le signal de télémetrie, selon lequel l'émission de chaque télégramme suivant de l'unité de télémétrie d'un régénérateur intermédiaire est déclenchée par la réception d'au moins un télégramme venant de l'équipement terminal de ligne ou du régénérateur intermédiaire précédent, selon lequel une autosurveillance des régénérateurs intermédiaires est opérée et les blocs de données des télégrammes contiennent, en tant que résultat de cette surveillance, des informations sur l'état des signaux numériques reçus et sur le fonctionnement du régénérateur intermédiaire concerné, selon lequel, dans l'appareil de localisation de l'équipement terminal de ligne côté réception, les régénérateurs intermédiaires sont localisés par décomptage des signaux de télémétrie et les différentes sections de voie et les régénérateurs intermédiaires sont surveillés par l'exploitation des blocs de données des signaux de télémétrie, caractérisé en ce que chacun des télégrammes présente, à côté des blocs de données (D), au moins une identification de tête (K1, K2), et une identification finale (E1), que les identifications de tête et finale (T1, . . . , Tn) sont identiques entre elles et forment une trame temporelle, que les identifications de tête et finale des télégrammes sont surveillées dans les unités de télémétrie réceptrices et qu'un télégramme est considéré comme reconnu exact lorsque le nombre des bits reçus correctement des identifications de tête et finale dépasse un seuil pouvant être préfixé, que seul des télégrammes reçus exactement sont régénérés, amplifiés et délivrés à la section de voie suivante, dans l'ordre de succession de leur réception, que le télégramme correspondant est supprimé lorsque ledit nombre des bits est inférieur au seuil préfixé et qu'un télégramme de remplacement est inséré à sa place dans la chaîne de télégrammes (Tk) à émettre.

2. Procédé selon la revendication 1, caractérisé en ce que le télégramme de remplacement présente la même forme prescrite pour toutes les unités de télémétrie et que cette forme est facilement reconnaissable côté réception.

3. Procédé selon la revendication 2, caractérisé en ce que le télégramme de remplacement contient une indication se rapportant à l'unité de télémétrie émettrice.

4. Unité de télémétrie pour la mise en œuvre du procédé selon les revendications 1 à 3, caractérisée en ce qu'elle comprend un dispositif de renouvellement de données de signalisation (ME) dont l'entrée forme la première entrée (EE1) de l'unité de télémétrie et qui reçoit les données à transmettre du régénérateur intermédiaire, qu'une sortie du dispositif de renouvellement de données de signalisation (ME) est reliée à une entrée d'un dispositif de registre à décalage (SR), que le signal de télémétrie reçu est appliqué à une seconde entrée (EE2) de l'unité de télémétrie et qu'à cette entrée sont raccordés, l'un après l'autre, un démodulateur de signal de télémétrie (DEM) et un décodeur de signal de télémétrie (DEC), qu'une sortie du décodeur de signal de télémétrie est reliée à une entrée de télémétrie du dispositif de registre à décalage (SR) et une autre sortie du décodeur de signal de télémétrie est reliée à une entrée d'une commande centrale (ST), que des sorties de la commande centrale (ST) sont connectées à des entrées de commande du dispositif de registre à décalage (SR), d'un oscillateur de rythme (TO), du dispositif de renouvellement de données de signalisation (ME), d'un dispositif de renouvellement de trame (RE), d'un compteur de trame (RZ) et d'un compteur de temps d'attente (WZ), que des sorties de l'oscillateur de rythme (TO), du compteur de trame (RZ) et du compteur de temps d'attente (WZ) sont connectées à des entrées de la commande centrale (ST), que des sorties du dispositif de renouvellement de trame (RE) sont reliées à des entrées du dispositif de registre à décalage (SR) et que des entrées d'un dispositif de contrôle de trame et de données (RD) sont reliées à des sorties des différents étages du dispositif de registre à décalage (SR), la sortie de ce dispositif de contrôle (RD) étant reliée à une entrée coordonnée de la commande centrale, et qu'une sortie de télémétrie du dispositif de registre à décalage (SR) est reliée, à travers le montage en série d'un codeur de signal de télémétrie (COD) et d'un démodulateur de signal de télémétrie (MOD), à une sortie de télémétrie (A) de l'unité de télémétrie.

5. Unité de télémétrie selon la revendication 4, caractérisée en ce que le dispositif de registre à décalage (SR) contient, côté entrée, un premier registre à décalage (SR1) à quatre étages, dont la sortie est reliée par un interrupteur numérique (S) à l'entrée d'un second registre à décalage (SR2) possédant 28 étages, que l'entrée de commande de l'interrupteur numérique (S) est reliée à une sortie coordonnée de la commande centrale (ST), que la sortie du dernier étage du second registre à décalage (SR2) forme la sortie du dispositif de registre à décalage (SR) et que les sorties des étages des deux registres représentent les sorties des étages du dispositif de registre à décalage (SR).

6. Unité de télémétrie selon la revendication 4, caractérisée en ce que le modulateur de signal de télémétrie (MOD) est réalisé comme un modulateur AM, FSK ou PSK et le démodulateur de signal de télémétrie (DEM) est réalisé comme un démodulateur AM, FSK ou PSK.

# FIG 1

## F I G 2a

| | E2 | E1 | D | K2 | K1 | E1 | D | K2 | K1 | | E1 | D | K2 | K1 | E2 | |
|---|---|---|---|---|---|---|---|---|---|---|---|---|---|---|---|---|

Tn — Tn-1 — T1

## F I G 2b

| | T1 | E2 | E2 | E2 | | E2 | E2 | Tn | Tn-1 | | | T4 | T3 | T2 | T1 | E2 | E2 | |
|---|---|---|---|---|---|---|---|---|---|---|---|---|---|---|---|---|---|---|

Tk

0 106 985